(19) **Europäisches Patentamt**

**European Patent Office**

**Office européen des brevets**

(11) **EP 1 155 402 B1**

(12) **EUROPEAN PATENT SPECIFICATION**

(45) Date of publication and mention
of the grant of the patent:
**30.08.2006 Bulletin 2006/35**

(51) Int Cl.:
*G10H 1/00* (2006.01)　　*H04L 9/00* (2006.01)

(21) Application number: **00911842.3**

(22) Date of filing: **16.02.2000**

(86) International application number:
**PCT/US2000/004012**

(87) International publication number:
**WO 2000/049597 (24.08.2000 Gazette 2000/34)**

(54) **AUDIO SYNTHESIS USING DIGITAL SAMPLING OF CODED WAVEFORMS**

AUDIOSYNTHESE DURCH DIGITAL ABTASTEN VON CODIERTEN WELLENFORMEN

SYNTHESE AUDIO UTILISANT L'ECHANTILLONNAGE NUMERIQUE DE FORMES D'ONDES CODEES

(84) Designated Contracting States:
**AT BE CH CY DE DK ES FI FR GB GR IE IT LI LU MC NL PT SE**

(30) Priority: **16.02.1999 US 120717 P**

(43) Date of publication of application:
**21.11.2001 Bulletin 2001/47**

(60) Divisional application:
**06012366.8**

(73) Proprietor: **Listen.Com, Inc.**
**San Francisco, CA 94103 (US)**

(72) Inventor: **BRATTON, Timothy**
**Los Altos, CA 94022 (US)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
**EP-A- 0 843 449**　　**GB-A- 2 222 057**
**US-A- 5 636 276**　　**US-A- 5 773 741**

• **YAMAMOTO H: "ON SECRET SHARING COMMUNICATION SYSTEMS WITH TWO OR THREE CHANNELS" IEEE TRANSACTIONS ON INFORMATION THEORY,US,IEEE INC. NEW YORK, vol. IT-32, no. 3, 1 May 1986 (1986-05-01), pages 387-393, XP000764636 ISSN: 0018-9448**

**Description**

Field of the Invention

This invention relates to coding and reproduction of audio signals.

Background of the Invention

Digital synthesizers or other electronic systems that create music or other sound can often be utilized as an electronic musical instrument or electronic sound machine. A digital synthesizer is often arranged to accept signals from a musician or operator interface and to produce digital output signals that represent analog signals in the audio frequency range. A digital synthesizer is also frequently arranged to accept pre-recorded sequences of music events in a Musical Instrument Digital Interface (MIDI) format.

A digital output signal from a digital synthesizer can be converted to an analog signal and delivered to equipment, such as a loudspeaker, tape recorder, mixer or other similar device, to reproduce the signals as intelligible sound. The digital synthesizer can be arranged to provide output signals that simulate the sounds of one or more conventional musical instruments. Alternatively, the synthesizer can be arranged to simulate sounds that would be emitted by a theoretical instrument having predetermined audio characteristics that are partly or wholly different from the corresponding characteristics of any convention, known instrument.

For previous synthesizers, synthesis of music and other sounds is a formidable task. A real musical instrument produces a complex blend of many different frequencies and impart what is commonly referred to as "tone color" or "timbre" to the associated sound. For example, a percussion sound made by a drum or cymbal is an aperiodic sound that cannot be fully described by any simple mathematical function. Accordingly, the reproduction or synthesis of digital signals representing sounds as rich and complex as a real musical instrument is a formidable task for digital signal sampling and processing. Ideally, the synthesizer should respond to the nuances of a musician's manipulation of the interface (e.g., a particular musical instrument). For example, a snare drum has many different audio characteristics when played in different locations, such as adjacent to the center of the drum membrane, adjacent to the rim, or on the rim of the drum. Additionally, the audio characteristics of a percussion instrument will vary with the striking force and stylistic inflection of the musician.

By providing a large enough waveform database, more realistic and expressive synthesis of a given group of sounds can be achieved. Many synthesizers relying on waveform sampling technology are used extensively in the music and multimedia fields for their ability to create musical sounds that closely emulate the sound of a musical instrument.

At present, a digital synthesizer system often utilizes a MIDI to control the synthesizer. The MIDI interface creates control signals or other MIDI control data. The MIDI control data may represent a music event, such as occurrence of specific musical notes from a particular musical instrument, such as a piano, drum or horn. However, MIDI has some fundamental limitations. For example, a synthesizer that uses a MIDI notation has trouble recreating a human voice.

A conventional synthesizer system utilizes a large solid state memory that stores the digital waveform signals representing each note played on a particular instrument. The memory can be a static random access memory (SRAM), a dynamic random access memory (DRAM), a read only memory (ROM) or some other similar memory with sufficiently rapid response. When a musician actuates a key or other interface device, the appropriate waveform is selected, depending upon the key actuated and upon the intensity and velocity of the key strike. The waveform is then converted into an analog output signal for sound reproduction. A digital waveform signal can be combined with other waveform signals that represent other musical notes being displayed, before the conversion to an analog output signal.

In this arrangement, the synthesizer, in effect, merely plays back digital recordings of individual musical notes or other sounds. Each waveform signal is stored as a collection of individual data words, each representing a single sample of the waveform at a particular time.

A sequencer is a device for editing musical data, such as MIDI events, and converting the musical data into a musical signal in real time. Synthesizers are frequently used together with a computer to play a musical score. In this arrangement, a sequencer reads a MIDI file as an ordered sequence. However, it is generally recognized that MIDI files and synthesizers are unable to recreate the nuances in a recording or to capture the background noises of a live audience.

Other prior art systems store only one or a relatively few waveform signals representing each musical instrument. These stored waveforms are then adjusted by digital signal processing or other electronic techniques, such as nonlinear distortion, to reflect the frequency and amplitude changes associated with particular musical characteristics, as indicated by the MIDI control data. For example, the frequency and amplitude of a sample waveform representing middle C on a piano can be adjusted to synthesize a different piano note and volume. However, these synthesizers are unable to (re) produce the complex blends or tone color with high enough fidelity for the musically trained ear.

In another approach, some systems use digital filtering to adjust the harmonic content of a particular note. However, these systems require a large amount of computer power and can be affected by audio quality degradation.

UK Patent Application Publication No. 2,222,057 describes an electro-magnetic broadcast access control method. In the described method, the information is split into separate parts and transmitted separately using electro-magnetic transmission and landline and re-assembled to reproduce the input information. Access is controlled by switching and metering of the landline part of the information. The electro-magnetically broadcast information may contain a jamming signal and a combination of the broadcast and landline signals is required to make the received signal intelligible.

What is needed is an audio synthesizer system that can reliably reproduce all types of sounds, including music and the human voice. Preferably, the system should allow a separation of music or other information-bearing sound into two or more selected components, where no single component allows reproduction of sounds resembling the original sounds. Preferably, the system should allow encryption or other encoding of one or more of the selected components and should allow change of parameters affecting the format of one or more of the components.

Summary of the Invention

These needs are met by the invention, which provides a method for removing one or more selected segments (referred to collectively as pre-processing components, or PPCs) of a digital signal stream that represents an assembly of information-bearing sounds (ISA), including but not limited to music and one or more human voices, to produce a remainder data file (referred to as a reduced data file, or ISDF), having one or more components, after decimation of the ISA by removal of the PPC(s). The ISDF, as a first sequence, and the assembly of PPCs, as a second sequence are preferably processed differently and communicated using different communication channels. The ISDF is preferably encrypted or otherwise encoded, using an encryption key EK that may be chosen independently or may depend upon information contained in the PPC(s). A data supplement DS, associated with the PPC(s) sequence, contains one or more of the following information items: location of at least one PPC within the original ISA: size of one or more of the PPCs; size of one or more components of the ISDF; separation distance within the ISA of two consecutive PPCs (if two or more are removed); and at least a portion of the encryption key EK. The encrypted version of the ISDF, E(ISDF), is communicated over a first communication channel, and the PPC(s) and the associated data supplement DS are communicated over a second communication channel, which may be arranged as a secure communication channel. Optionally, the PPC(s) and associated data supplement channel may also be encrypted for communication. Optionally, more than one sequence of removed PPCs can be formed, each with an associated data supplement DS, and communicated separately from the remaining ISDF component(s).

The invention allows an assembly of information-bearing sounds ISA, such as music or the sound(s) of one or more human voices, to be disassembled into N+1 complementary sequences (N>1), where any collection of N+1-k sequences ($1 \le k \le N$), including the ISDF, will not allow reconstruction of an assembly of sounds resembling the original ISA.

One useful application of this invention is the provision of a legally protected ISA (e.g., an ISA covered by copyright) as N+1 sequences ,
where any collection of N or fewer sequences cannot be used to reproduce the original ISA. The invention would, for example, allow distribution of a subset N+1-k of these N+1 sequences to a prospective authorized listener at one time (e.g., for storage for possible future use) and distribution of the remaining k sequences ($1 \le k \le N$) at another time, when the listener is now authorized to listen to the entire ISA.

Another useful application of the invention is the provision or earlier distribution of a first sequence, representing the bulk or majority of the sounds needed to accurately reproduce the ISA, where the first sequence has certain critical data removed. The second sequence, containing the remainder of the ISA data needed to accurately reproduce the ISA, is distributed using another channel and/or at another, more convenient time.

In summary, according to a first aspect of the invention there is provided a method of encoding or encrypting audio data, comprising providing a digital signal stream representing an assembly of information-bearing sounds; removing one or more selected segments of the digital signal stream, to produce a specified data file comprising the remaining data of the digital signal stream; providing an encoding or encryption key and encoding or encrypting the specified data file; communicating the encoded or encrypted specified data file in a first selected communication channel and communicating the removed segments in a second selected communication channel; and providing a data supplement that indicates at least one of: location of at least one of said removed segments within the digital signal stream, size of at least one of said removed segments, number of segments removed, separation distance between two consecutive removed segments within the digital signal stream, and a selected portion of said encoding or encryption key.

According to a second aspect of the invention, there is provided a method of decoding or decrypting audio data, comprising providing an encoded or encrypted first data file; providing a second data file and a data supplement that indicates at least one of: an assigned location of at least one designated segment of the second data file within a non-coded and non-encrypted version of the first data file, size of at least one designated segment of the second data file within the non-coded and non-encrypted first data file, number of selected segments designated, separation distance of at least two consecutive designated segments of the second data file within the non-coded and nonencrypted first data file, and a selected portion of an encoding or encryption key used to encode or encrypt the first data file; and using the data supplement to decode or decrypt the encoded or encrypted first data file and to position at least a first sequence and a second sequence, drawn from the second data file, within the first data file.

According to a third aspect of the present invention, there is provided a method of communicating audio data, comprising providing a representation of an assembly of information-bearing sounds as a digital file of data; removing one or more selected segments from the data file, to produce a specified data file comprising the remaining data of the data file, the specified data file having at least a first block and a second block; providing an encoding or encryption key having at least a first key portion and a second key portion; providing a data supplement that indicates at least one of: location of at least one of the removed segments within the data file, size of at least one of the removed segments within the data file, number of segments removed, separation distance between two consecutive removed segments within the data file, and at least a portion of the encoding or encryption key; encoding or encrypting the first block and the second block of the specified data file, using the first portion and the second portion, respectively, of the encoding or encryption key; and communicating the encoded or encrypted specified data file in a first selected communication channel and communicating the removed segments and the data supplement in a second selected communication channel.

Brief Description of the Drawings

Figure 1 is a schematic view of apparatus that creates an MP3 file.

Figures 2A-2C illustrate an original ISA, expressed as a digital sequence, and the results of disassembly of the ISA into an ISDF and a sequence of PPCs and of association of a DS with a PPC sequence.

Figure 3 is a schematic view of a digital file sampling composer and a digital file sampling synthesizer.

Figures 4, 5 and 6 are flow charts illustrating practice of embodiments of the invention.

Description of Best Modes of the Invention

MP3, which refers to Layer 3 of the MPEG1 standard, has been developed and adopted as a useful audio compression standard for music and other assemblies of information-bearing sounds (ISAs). MP3 is discussed in some detail in ISO/IEC 11172-3, an international standards document, incorporated by reference herein. A protocol for creation of an MP3 file is well known to those of ordinary skill in the are of sound compression. Many software programs, such as Audio Catalyst, offered by Xing Technology, which runs on a personal computer, implement creation an MP3 file.

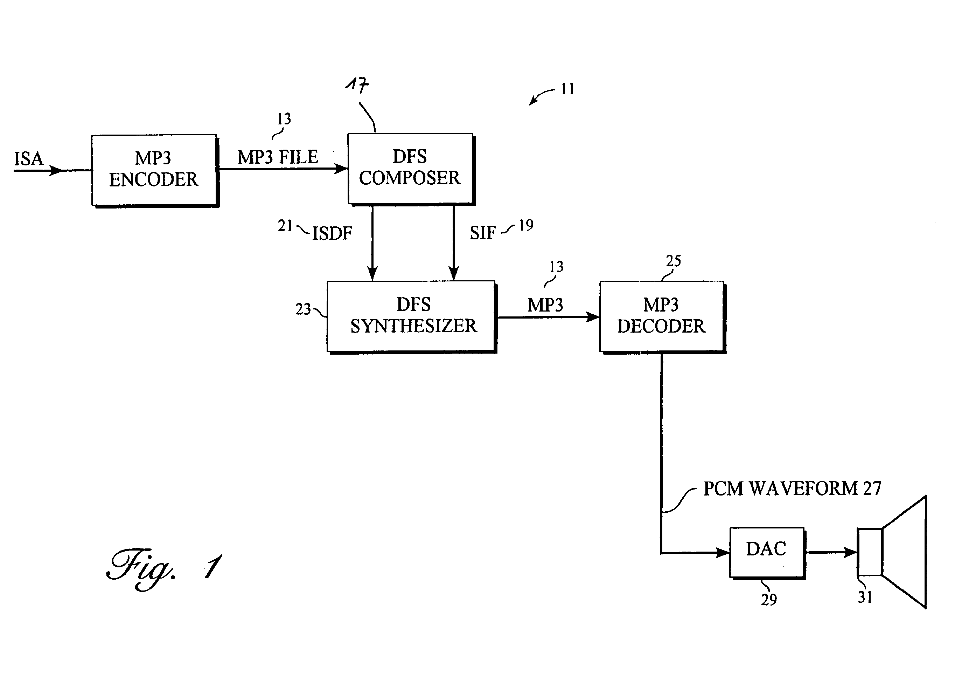

Figure 1 illustrates apparatus 11 that may be used to create an MP3 file 13 from an ISA 15. The ISA 15 is received by a digital file sampling composer (DFSC) 17. The DFSC 17 creates and issues a synthesizer information file (SIF) 19 and an item specific data file (ISDF) 21. For decoding, a DFS synthesizer 23 receives and uses the SIF 19 to provide suitable sequencing for the ISDF 21. The recovered MP3 file 13 is received and decoded by an MP3 decoder 25, which issues a pulse code modulation (PCM) waveform 27. The PCM waveform 27 can be played or otherwise "displayed" through a digital-to-analog converter (DAC) 29, connected to a speaker 31.

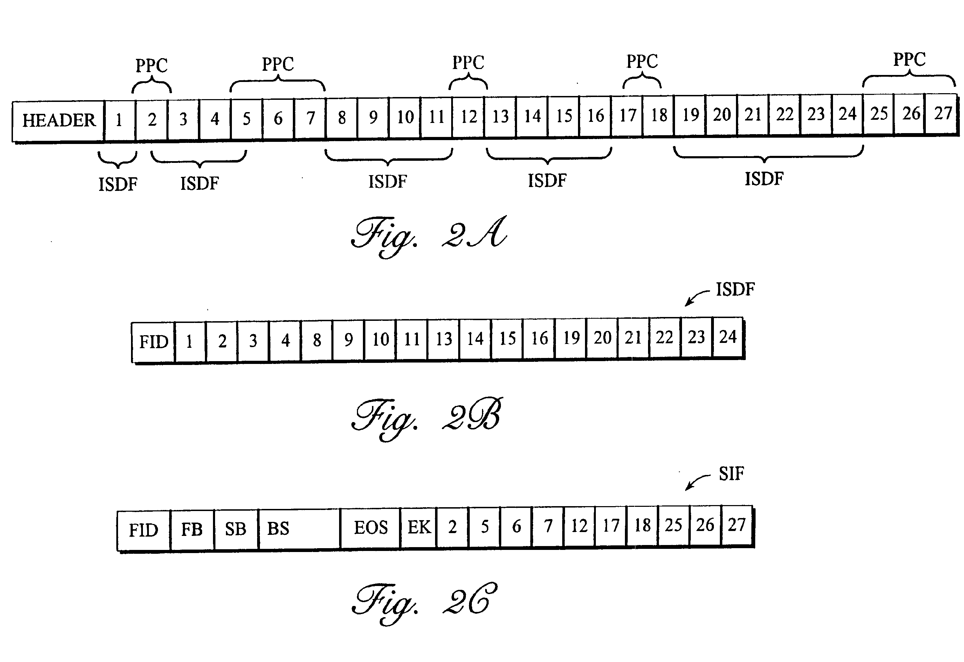

Figures 2A-2C illustrate an ISA 15 as an ordered sequence of bits, nibbles, bytes or other information units, numbered n = 1, 2, ... , 27, that are part of an ISA. The ISA (e.g., an MP3 source file) 15 can be any length. A first subset of these information units, namely "2", "5", "6", "7", "12", "17", "18", "26", "27", is removed as a sequence of pre-processing components (PPCs) and is stored in an SIF 19. The remaining data are stored in an ISDF for encryption. In Figure 2A, the ISA 15 is shown with a 32-bit header (or trailer, if desired), 27 bytes of data and an ID3 tag. The ISDF 21, shown in Figure 2B, has a file identification (FID) tag and a data field with a selected number of bytes of samples. The SIF 19, shown in Figure 2C, has an FID field, an ID3 tag, a 32-bit header field, a 2 byte file block (FB) field, a 2 byte song block (SB) field, a variable block size (BS) field, a 1-bit end-of-selection (EOS) flag and at least a portion of an encoding/ encryption key (EK). The file block field FB specifies the number of blocks of data for the ISDF 21. The song block SB specifies the number of blocks of data to be removed for the SIF 19, preferably using a file stripping algorithm. The block size filed BS specifies the number of bits per block, which may be uniform or may be non-uniform. The EOS flag indicates that the coding process ended on data for the SIF 19 (EOS=1) or ended on data for the ISDF 21 (EOS=0).

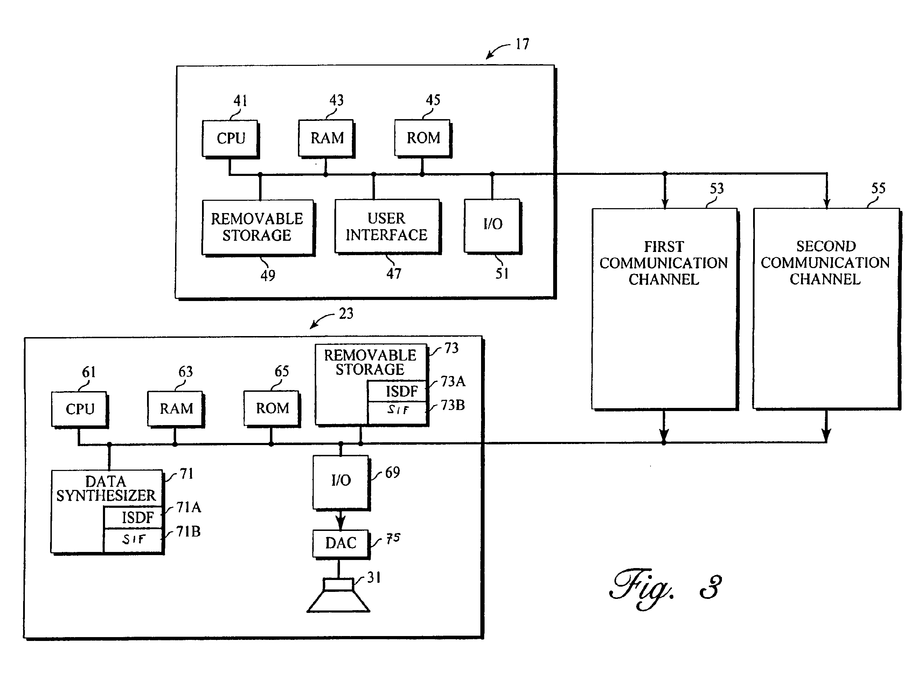

Figure 3 illustrates a DFSC 17, which includes a first CPU 41, a first RAM 43, a first ROM 45, a first user interface 47, a removable storage unit 49, a data I/O module 51, and first and second communication channels, 53 and 55. The first interface 47 may include any or all of a keypad, keyboard, light pen or other data/command entry device, a mouse, and a display module, such as a monitor, LED or LCD device. The first and second channels, 53 and 55, may be the same channel. Alternatively, the first and second channels may be different. For example, the second channel 55 may be a secure channel that offers at least a reasonable degree of protection against unauthorized reception of the signals on the second channel.

Figure 3 also illustrates a DFSS 23, which includes a second CPU 61, a second RAM 63, a second ROM 65, a second user interface 67, a data I/O module 69, a data synthesizer database 71, a removable storage device 73, and a DAC 75. The data synthesizer database 71 may include an ISDF database 71A and/or an SIF database 71B. The removable storage device 73 may include an ISDF database 73A and/or an SIF database 73B.

Digital samples that are part of the ISDF 21 and/or are part of the SIF 19 may be transferred from the DFS composer 17 to the DFS synthesizer 23 using the first communication channel 53 (for ISDF samples) and/or the second communication channel 55 (for SIF samples) and/or may be recorded using the removable storage device 73 in the DFS synthesizer 23.

In a preferred embodiment, at least one of the first and second communication channels, 53 and 55, is the Internet. However, any other communication channel(s) can be used to communicate ISDF samples and/or SIF samples, including wireless methods, such as FM subcarrier, CDPD, transmission using the vertical blanking interval of a television signal, and other similar wireless methods.

The ISDF database 71A and the SIF database 71B may include samples from any of several sample sources.

The DFS synthesizer 23 can operate in many different modes, including the following: (1) synthesize an MP3 file from an ISDF database 71A and from SIF samples streamed from the second communication channel 55; (2) synthesize an MP3 file from ISDF samples streamed from the first communication channel 53 and from an SIF database 71B; (3) synthesize an MP3 file from an ISDF database 73A and from SIF samples streamed from the second communication channel 55; and (4) synthesize an MP3 file from an ISDF database 71A and from an SIF database 73B.

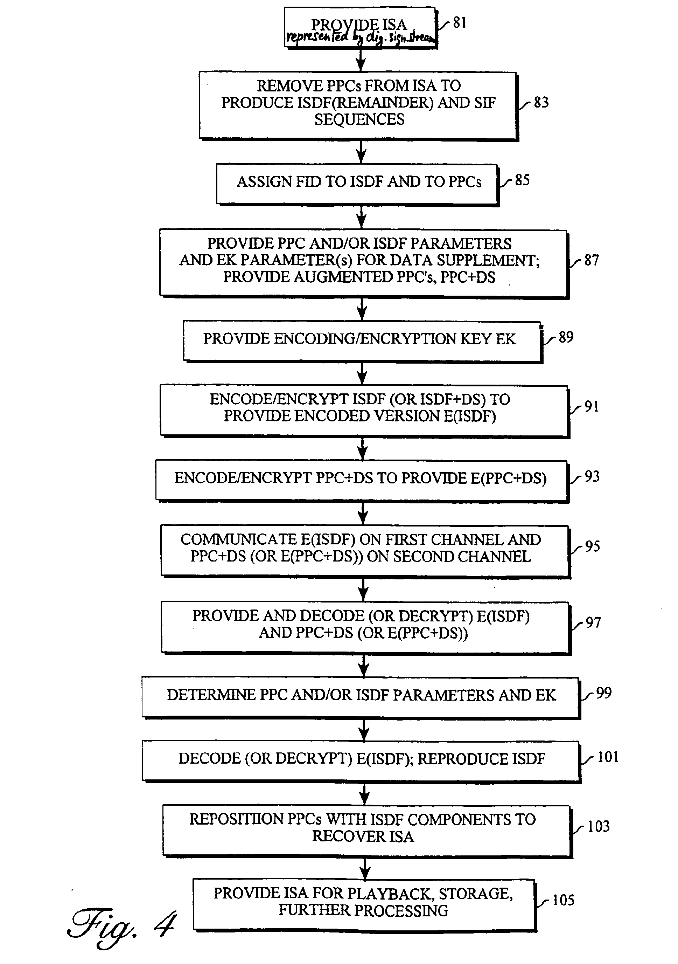

Figure 4 is a flow chart illustrating a procedure for practicing audio synthesis according to the invention. In step 81, an ISA including an ordered sequence of units containing digital symbols, is provided. In step 83, the PPCs within the ISA are designated and stripped out or removed from the remainder ISDF of the ISA. In step 85, a file identification number FID is assigned to the PPCs and to the ISDF. In step 87, one or more parameters that characterizes the PPCs and/or the ISDF components is provided and is placed in a data supplement DS that is associated with the PPCs (preferable), to provide an augmented PPC sequence, PPC+DS, and/or with the ISDF. In step 89, an encoding key EK (e.g., an encryption key) is provided, either independently or using one or more parameters provided by one or more components of the PPCs. Normally, the EK will have a fixed encoding procedure but optionally will have one or more parameters that are adjustable according to information supplied by the PPCs or the ISDF. For example, one or more PPCs may provide initial values needed to begin the encoding process. In step 91, the ISDF (or an augmentation ISDF+DS) is encoded (e.g., encrypted), using the encoding key EK, to produce an encoded version E(ISDF). In step 93 (optional; usually not necessary), the augmented PPC sequence, PPC+DS, is also encoded to provide an encoded version E(PPC+DS).

In step 95, the encoded version E(ISDF) is communicated using a first communication channel, and the augmented PPC sequence, PPC+DS, is communicated using a second communication channel. The first and second communication channels may be the same, if desired. Alternatively, the second communication channel may be a secure channel, to protect an non-encoded augmented PPC sequence, PPC+DS, from disclosure to unauthorized entities.

In step 97, the encoded version E(ISDF) and the augmented PPC sequence, PPC+DS (or E(PPC+DS)), are received or otherwise provided, and a decoding (e.g., decryption) process is begun. In step 99, the data supplement DS within the augmented PPC sequence, PPC+DS, is examined, the PPC and/or ISDF parameters are identified, and (optionally) part or all of the encoding key EK is recovered. In step 101, the encoded version E(ISDF) is decoded, to (re)produce the ISDF. In step 103, the PPC components are repositioned among the ISDF components to recover the original ISA. In step 105 (optional), the ISA is provided for an ISA repository for playback, display, storage or further processing.

Optionally, the steps 97-103 may be varied by providing a first of the two sequences, E(ISDF) or PPC+DS, in a first database that is available at one or more locations to any potential user. However, possession of the first sequence, or of the second sequence, along, does not allow the user to reproduce the sounds of the original ISA. Each of the first sequence and the second sequence is a decimated version of the original ISA; and the sounds, if any, reproduced by the first sequence or by the second sequence alone are, preferably, not intelligible. The second sequence is withheld until the user has obtained proper authorization (e.g., a license) to reproduce the sounds of the original ISA. The first sequence may, if desired, represent the majority or bulk of the digital signals needed to reproduce the original ISA so that the remainder (second sequence) requires far less bandwidth or communication capacity for delivery than does the original ISA.

The encoding procedure may, for example, incorporate an encryption process, such as cipher block chaining (CBC), described by Bruce Schneier, Applied Cryptography, John Wiley & Sons, Second Edition, 1996, pp. 193-197. In one implementation of CBC, a cleartext block of a selected size is EXclusively ORed (XORed) or EXclusively NORed (XNORed) with a key block and with a preceding ciphertext block to produce a new ciphertext block. The resulting ciphertext block is XORed or XNORed with a next consecutive cleartext block and with the next consecutive key block, and so on until a final encrypted block is generated. The operations XOR and XNOR are each symmetric, commutative, associative and bilinear so that order is not important within the ith step. If Pi, Ci and Ki (i = 1,2, ...) represent cleartext block number i, ciphertext block number i and key block number i, respectively, a CBC procedure can be represented mathematically as

$$C(i+1) = Pi \text{ XNOR } Ci \text{ XNOR } Ki, \qquad (1)$$

and the initial ciphertext block (i=1) can be specified by one or more of the PPCs. The choice XNOR, rather than XOR, is made here because of a useful "inversion" relation

$$A \text{ XNOR } A = I \text{ (identity)} \qquad (2)$$

for any block A of binary symbols. With this approach, preferably, the size of a key block Ki is the same as the size of a cleartext block Pi and is the same as the size of a cipher text block Ci. This constraint can be relaxed somewhat.

When the encrypted message E(ISDF) is received, the process is reversed, beginning with an initial ciphertext block Ci' that is determined using information obtained from that data supplement component(s) received as part of the encrypted message E(ISDF):

$$P(i+1) = C(i+1)' \text{ XNOR } Ci' \text{ XNOR } Pi. \qquad (3)$$

Each of Eqs. (1) and (3) illustrates a sub-encryption cycle (or sub-decryption cycle) for the encryption or decryption process, where an initial ciphertext block is optionally provided by a key block Ki with i = 1. Each sub-encryption cycle, set forth as an example in Eq. (1), will have an independently specified key component Ki.

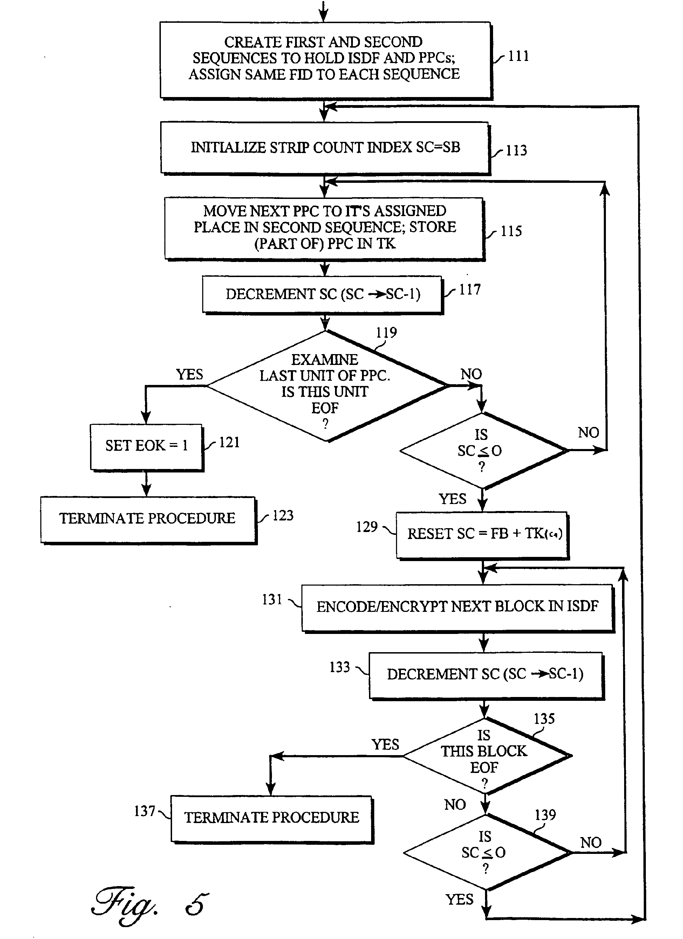

Figure 5 is a flow chart illustrating a file stripping algorithm that can be applied to an ISA using an embodiment of the invention. In step 111, a first sequence of units (to hold an ISDF) and a second sequence of units (an SIF to hold the PPCs) are created, each of unspecified length, and the same FID is assigned to each sequence. The assembled first and second sequences will resemble the sequences shown in Figures 1B and 1C. In step 113, a strip count index SC is set equal to the specified number SB of PPCs. In step 115, the first PPC, or the next PPC in the ordered sequence of PPCs, is moved from the initial sequence (Figure 1A) to that PPC's assigned place in the second sequence. A selected portion of this PPC (which may be the empty set for a particular PPC) is stored in a location, denoted as TK, for future use. The particular arrangement of bits or other information units stored in TK is referred to herein as the "content" of TK, written TK(c). A portion of this content TK(c) can also be used to determine one or more parameters for the encryption key EK.

In step 117, the strip count index SC is decremented by 1 (SC→SC-1). In step 119, the system examines the last unit in the particular component of the second sequence (PPCs) and determines if this last unit is an end-of-file unit (EOF = 0). If the answer to the query in step 119 is "yes", the system sets an EOK flag equal to a selected value (e.g., EOK = 1), in step 121, and the procedure terminates, at step 123.

If the answer to the query in step 119 is "no", the system determines if the strip count index satisfies SC ≤0, in step 127. If the answer to the query in step 127 is "no", the system recycles to step 115 and the procedure continues. If the answer to the query in step 127 is "yes", the system initializes the strip count index to FB + TK(c1), in step 129, where TK(c1) is a selected subset of the content TK(c) held at the location TK. Use of a combination FB + TK(c1), with TK(c1) variable, allows the number of sub-cycles covered in the (following) steps 121 through 129 to be varied or "dithered" within the procedure.

In step 131, the system encrypts the first block, or the next consecutive block, in the first sequence of units (ISDF). In step 133, the system decrements the (new) strip count index SC (SC_SC-1). In step 135, the system determines if an EOF is present in this block. If the answer to the query in step 135 is "yes", the procedure terminates at step 137. If the answer to the query in step 135 is "no", the system determines if the (new) strip count index satisfies SC≤ 0, in step 139. If the answer to the query in step 139 is "no", the system recycles to step 131 and the procedure continues. If the answer to the query in step 139 is "yes", the system recycles to step 113 and the procedure continues.

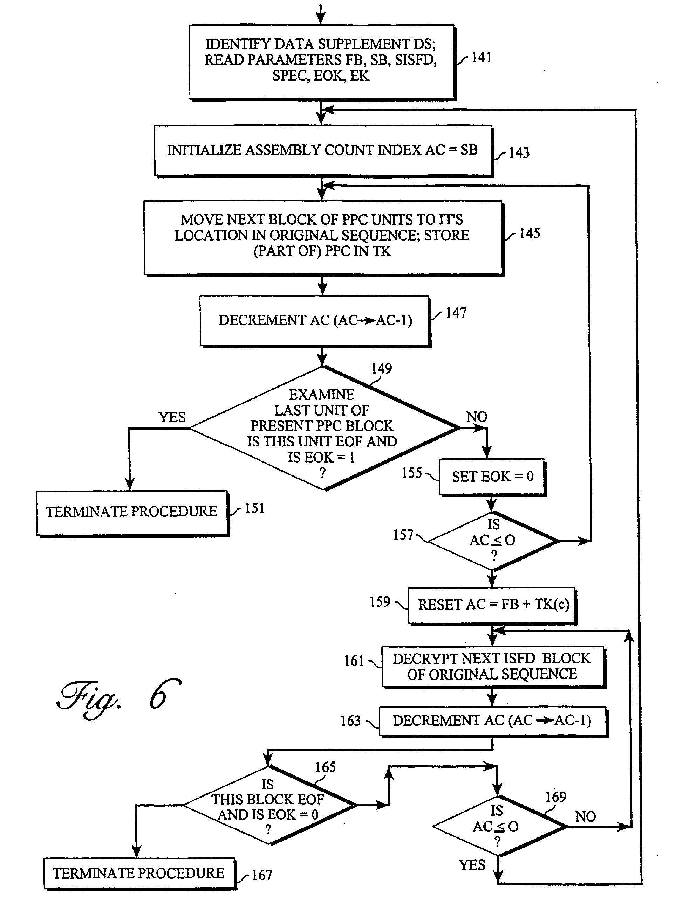

Figure 6 is a flow chart illustrating a file assembly procedure that can be used with an embodiment of the invention. In step 141, the system identifies the data supplement DS and reads the parameters FB, KB, SISFD, SPPC, EOK and EK. In step 143, the system initializes an assembly count index, AC = SB. In step 145, the system moves the first block, or the next consecutive block, of the first sequence of units (PPC) to its proper location in the original sequence of units (specified by SB, FBS and KBS) and stores a selected portion of the PPC information (which may be the empty set) at a designated location TK. In step 147, the system decrements the assembly count index (AC → AC-1).

In step 149, the system examines the last unit in the particular component of the second sequence (PPCs) and determines (1) if this last unit is an end-of-file unit and (2) if EOK = 1. If the answers to the compound query in step 149 are "yes" and "yes", the procedure terminates, at step 151. If the answer to one or both parts of the compound query in step 149 is "no", the system sets the EOK flag equal to another selected value (e.g., EOK = 0), in step 155. In step 157, the system determines if the assembly count index satisfies AC μ 0.

If the answer to the query in step 157 is "no", the system recycles to step 145 and the procedure continues. If the answer to the query in step 157 is "yes", the system resets an initial assembly count index, AC = FB + TK(c1), in step 159, where TK(c1) is a selected subset of the content TK(c). Again, use of a combination FB + TK(c1), with TK(c1) variable, allows the number of sub-cycles covered in the (following) steps 161 through 169 to be varied or "dithered" within the procedure.

In step 161, the system decrypts the next consecutive block of a reassembled original sequence. In step 163, the system decrements the (new) assembly count index (AC → AC-1). In step 165, the system examines the last unit in the particular component of the first sequence (ISDF) and determines (1) if this last unit is an end-of-file unit and (2) if EOK= 0. If the answers to this compound query in step 165 are "yes" and "yes", the system terminates the procedure, at step 167. If the answer to one or both parts of the compound query in step 165 is "no", the system determines, at step 169, if the assembly count index AC satisfies AC ≤ 0. If the answer to the query at step 169 is "no, the system recycles to step 161 and the procedure continues. If the answer to the query in step 169 is "yes", the system recycles to step 143 and the procedure continues.

In another embodiment, no PPCs are removed, and the entire file becomes an ISDF. No data supplement DS need be included, unless (part of) the encoding/encryption key EK is to be communicated with the encoded/encrypted version E(ISDF) or as part of an SIF. Otherwise, the SIF and the DS may be deleted in this embodiment. With reference to Figure 4, steps 87, 93, 99 and/or 103 are optionally deleted in this embodiment. The file stripping algorithm, shown in Figure 5, and the file assembly algorithm, shown in Figure 6, are not used in this embodiment; this may also be implemented by formally setting FB = SB = 0 in Figures 5 and 6.

The disclosed procedure relies primarily upon several features to provide secure communication of an ISA, as two or more sequences, where no combination of less than all the sequences will produce an assembly of sounds that adequately resemble the original ISA. First, portions of the message, the PPCs, are removed from the original ISA and are communicated separately, optionally using a secure channel. Second, the remainder of the ISA, the ISDF, is encrypted, using an encoding or encryption key that can vary in length and other characteristics from one block or component of the ISDF to another, as indicated in the discussion of Figures 5 and 6. Third, information in one or more of the PPCs can be used to determine one or more parameters in portions of the encoding or encryption key EK. Fourth, an augmented PPC sequence PPC+DS can also be encoded and/or encrypted before communication thereof.

Among other things, an unauthorized (or unlicensed) recipient of the encoded/encrypted version E(ISDF) and/or of the augmented PPC sequence PPC+DS would need to be aware of (1) the encoding or encryption key used to process the encoded/encrypted version E(ISDF) (and, optionally, used to encrypt the augmented PPC sequence PPC+DS), (2) the placement and meaning of ISDF, PPC and/or EK information contained in the data supplement DS, (3) the use of the information in the data supplement DS to reposition the PPCs within a decoded or decrypted ISDF, and (4) possible variation of the encoding/encryption key from one ISDF component to the next, in order to fully decode or decrypt an intercepted ISDF representing and ISA. The number of parameters and block-to-block variability incorporated in this system allows one to distribute or otherwise provide one or more, but less than all, of the sequences formed from the ISA, without making available any version that can be intelligibly played back. The missing sequence(s) from the ISA can be distributed to licensed or otherwise authorized "listeners", by another channel and/or at another time.

**Claims**

1.  A method of encoding or encrypting audio data, comprising:

    providing a digital signal stream (13) representing an assembly of information-bearing sounds (ISA);
    removing one or more selected segments (PPC) of the digital signal stream (13), to produce a specified data file (ISDF) comprising the remaining data of the digital signal stream (13);
    providing an encoding or encryption key and encoding or encrypting the specified data file (ISDF);
    communicating the encoded or encrypted specified data file (ISDF) in a first selected communication channel and communicating the removed segments (PPC) in a second selected communication channel; and
    providing a data supplement that indicates at least one of: location of at least one of said removed segments (PPC) within the digital signal stream (13); size of at least one of said removed segments (PPC); number of segments removed; separation distance between two consecutive removed segments within the digital signal stream (13); and a selected portion of said encoding or encryption key.

2.  The method of claim 1, further comprising communicating said data supplement in said second selected communication channel.

3.  The method of claim 1, further comprising providing said encoding or encryption key with at least one key parameter that uses information from at least one of said removed segments.

4.  The method of claim 1, further comprising selecting said first and second selected communication channels to be the same channel.

5.  The method of claim 1, further comprising providing said second channel as a secure communication channel.

6.  The method of claim 1, further comprising concatenating said removed segments and said data supplement as a concatenated data file.

7.  The method of claim 6, further comprising encrypting said specified data file using cipher block chaining of at least one block of said concatenated data and at least one encoded or encrypted block from said specified data file.

8.  The method of claim 7, further comprising providing said at least one encoding or encryption parameter for said encoding or encryption key by providing a block of said concatenated data file as an initial block for said at least one encoded or encrypted block of said data.

9.  The method of claim 1, further comprising removing at least first and second segments from said data file, where the first segment and the second segment have equal length.

10. The method of claim 1, further comprising removing at least first and second segments from said data file, where the first segment and the second segment have different lengths.

11. The method of claim 1, further comprising combining said removed segments with said specified data file to form a combined data file and reproducing the combined data file as an assembly of sounds.

12. A method of decoding or decrypting audio data, comprising:

    providing an encoded or encrypted first data file;
    providing a second data file and a data supplement that indicates at least one of: an assigned location of at least one designated segment of the second data file within a non-coded and non-encrypted version of the first data file; size of at least one designated segment of the second data file within the non-coded and non-encrypted first data file; number of selected segments designated; separation distance of at least two consecutive designated segments of the second data file within the non-coded and nonencrypted first data file; and a selected portion of an encoding or encryption key used to encode or encrypt the first data file; and
    using the data supplement to decode or decrypt the encoded or encrypted first data file and to position at least a first sequence and a second sequence, drawn from the second data file, within the first data file.

13. The method of claim 12, further comprising providing said encoded or encrypted first data file on a first communication channel and providing said concatenation of said second data file and said data supplement on a second communication channel.

14. The method of claim 13, further comprising selecting said first and second communication channels to be the same channel.

15. The method of claim 13, further comprising providing said second channel as a secure communication channel.

16. The method of claim 13, further comprising determining at least one parameter of said encoding or encryption key using information in said second data file.

17. The method of claim 12, further comprising providing said encoded or encrypted first data file using cipher block chaining of at least one block of said concatenation of said second data file and said data supplement and at least one encoded or encrypted block from said first data file.

18. The method of claim 17, further comprising providing at least one encoding or encryption key parameter for said encoding or encryption key by providing at least one of said first sequence and said second sequence as an initial block for said at least one encoded or encrypted block of said data.

19. The method of claim 12, further comprising providing said second data file and said data supplement as a concatenated data file.

20. The method of claim 12, further comprising combining said removed segments with said specified data file to form a combined data file and reproducing the combined data file as an assembly of sounds.

21. A method of communicating audio data, comprising:

providing a representation of an assembly of information-bearing sounds as a digital file of data;
removing one or more selected segments from the data file, to produce a specified data file comprising the remaining data of the data file, the specified data file having at least a at least a first block and a second block;
providing an encoding or encryption key having at least a first key portion and a second key portion;
providing a data supplement that indicates at least one of: location of at least one of the removed segments within the data file; size of at least one of the removed segments within the data file; number of segments removed; separation distance between two consecutive removed segments within the data file; and at least a portion of the encoding or encryption key;
encoding or encrypting the first block and the second block of the specified data file, using the first portion and the second portion, respectively, of the encoding or encryption key; and
communicating the encoded or encrypted specified data file in a first selected communication channel and communicating the removed segments and the data supplement in a second selected communication channel.

**Patentansprüche**

1. Verfahren zum Codieren oder Verschlüsseln von Audiodaten, das aufweist:

Bereitstellen einer digitalen Signalfolge (13), die eine Zusammenstellung von Informationen tragenden Klängen (ISA) darstellt;
Entfernen eines ausgewählten Segments oder mehrerer Segmente (PPC) der digitalen Signalfolge (13), um eine spezifizierte Datendatei (ISDF) zu erzeugen, die die verbleibenden Daten der digitalen Signalfolge (13) aufweist;
Bereitstellen eines Codier- oder Verschlüsselungsschlüssels und Codieren oder Verschlüsseln der spezifizierten Datendatei (ISDF);
Kommunizieren der codierten oder verschlüsselten, spezifizierten Datendatei (ISDF) in einem ersten, ausgewählten Kommunikationskanal und Kommunizieren der entfernten Segmente (PPC) in einem zweiten, ausgewählten Kommunikationskanal; und
Bereitstellen eines Datenzusatzes, der mindestens eines anzeigt von: einer Stelle mindestens eines der entfernten Segmente (PPC) innerhalb der digitalen Signalfolge (13); einer Größe mindestens eines der entfernten Segmente (PPC); einer Zahl von Segmenten, die entfernt ist; einem Separationsabstand zwischen zwei aufeinanderfolgenden, entfernten Segmenten innerhalb der digitalen Signalfolge (13); und einem ausgewählten Bereich des Codier- oder Verschlüsselungsschlüssels.

2. Verfahren nach Anspruch 1, das weiterhin ein Kommunizieren des Datenzusatzes in dem zweiten, ausgewählten Kommunikationskanal aufweist.

3. Verfahren nach Anspruch 1, das weiterhin ein Bereitstellen des Codier- oder Verschlüsselungsschlüssels mit mindestens einem Schlüsselparameter, der Informationen von mindestens einem der entfernten Segmente verwendet, aufweist.

4. Verfahren nach Anspruch 1, das weiterhin ein Auswählen des ersten und des zweiten, ausgewählten Kommunikationskanals, um derselbe Kanal zu sein, aufweist.

5. Verfahren nach Anspruch 1, das weiterhin ein Bereitstellen des zweiten Kanals als einen sicheren Kommunikationskanal aufweist.

6.  Verfahren nach Anspruch 1, das weiterhin ein Verknüpfen der entfernten Segmente und des Datenzusatzes als eine verknüpfte Datendatei aufweist.

7.  Verfahren nach Anspruch 6, das weiterhin ein Verschlüsseln der spezifizierten Datendatei unter Verwendung eines Chiffrierblocks, der mindestens einen Block der verknüpften Datendatei und mindestens einen codierten oder verschlüsselten Block von der spezifizierten Datendatei verkettet, aufweist.

8.  Verfahren nach Anspruch 7, das weiterhin ein Bereitstellen des mindestens einen Codier- oder Verschlüsselungsparameters für den Codier- oder Verschlüsselungs-schlüssel durch Bereitstellen eines Blocks der verknüpften Datendatei als einen Anfangsblock für den mindestens einen codierten oder verschlüsselten Block der Daten aufweist.

9.  Verfahren nach Anspruch 1, das weiterhin ein Entfernen mindestens des ersten oder des zweiten Segments von der Datendatei aufweist, wobei das erste Segment und das zweite Segment eine gleiche Länge haben.

10. Verfahren nach Anspruch 1, das weiterhin ein Entfernen mindestens des ersten oder des zweiten Segments von der Datendatei aufweist, wobei das erste Segment und das zweite Segment unterschiedliche Längen haben.

11. Verfahren nach Anspruch 1, das weiterhin ein Kombinieren der entfernten Segmente mit der spezifizierten Datendatei, um eine kombinierte Datendatei zu bilden,
und Wiedergeben der kombinierten Datendatei als eine Zusammenstellung von Klängen aufweist.

12. Verfahren zum Decodieren oder Entschlüsseln von Audiodaten, das aufweist:

    Bereitstellen einer codierten oder verschlüsselten ersten Datendatei;
    Bereitstellen einer zweiten Datendatei und eines Datenzusatzes, der mindestens eines anzeigt von: einer zugeordneten Stelle mindestens eines bezeichneten Segments der zweiten Datendatei innerhalb einer nicht codierten und nicht verschlüsselten Version der ersten Datendatei; einer Größe mindestens eines bezeichneten Segments der zweiten Datendatei innerhalb der nicht codierten und nicht verschlüsselten ersten Datendatei; einer Zahl von ausgewählten Segmenten, die bezeichnet ist; einem Separationsabstand von mindestens zwei aufeinanderfolgenden, bezeichneten Segmenten der zweiten Datendatei innerhalb der nicht codierten und nicht verschlüsselten ersten Datendatei; und einem ausgewählten Bereich eines Codier- oder Verschlüsselungsschlüssels, verwendet dazu, die erste Datendatei zu codieren oder zu verschlüsseln; und
    Verwenden des Datenzusatzes, um die codierte oder verschlüsselte erste Datendatei zu decodieren oder zu entschlüsseln und um mindestens eine erste Sequenz und eine zweite Sequenz, gezogen von der zweiten Datendatei, innerhalb der ersten Datendatei, zu positionieren.

13. Verfahren nach Anspruch 12, das weiterhin ein Bereitstellen der codierten oder verschlüsselten ersten Datendatei auf einem ersten Kommunikationskanal und Bereitstellen der Verknüpfung der zweiten Datendatei und des Datenzusatzes auf einem zweiten Kommunikationskanal aufweist.

14. Verfahren nach Anspruch 13, das weiterhin ein Auswählen des ersten und des zweiten Kommunikationskanals so, um derselbe Kanal zu sein, aufweist.

15. Verfahren nach Anspruch 13, das weiterhin ein Bereitstellen des zweiten Kanals als einen sicheren Kommunikationskanal aufweist

16. Verfahren nach Anspruch 13, das weiterhin ein Bestimmen mindestens eines Parameters des Codier- oder des Verschlüsselungsschlüssels unter Verwendung von Informationen in der zweiten Datendatei aufweist.

17. Verfahren nach Anspruch 12, das weiterhin ein Bereitstellen der codierten oder verschlüsselten ersten Datendatei unter Verwendung eines Chiffrierblocks, der mindestens einen Block der Verknüpfung der zweiten Datendatei und des Datenzusatzes und mindestens einen codierten oder verschlüsselten Block der ersten Datendatei verkettet.

18. Verfahren nach Anspruch 17, das weiterhin ein Bereitstellen mindestens eines Codier- oder Verschlüsselungs-Schlüssel-Parameters für den Codier- oder Verschlüsselungsschlüssel durch Bereitstellen mindestens eines der ersten Sequenz und der zweiten Sequenz als einen Anfangsblock für den mindestens einen codierten oder verschlüsselten Block der Daten aufweist.

**19.** Verfahren nach Anspruch 12, das weiterhin ein Bereitstellen der zweiten Datendatei und des Datenzusatzes als eine verknüpfte Datendatei aufweist.

**20.** Verfahren nach Anspruch 12, das weiterhin ein Kombinieren der entfernten Segmente mit der spezifizierten Datendatei, um eine kombinierte Datendatei zu bilden, und ein Wiedergeben der kombinierten Datendatei als eine Zusammenstellung von Klängen aufweist.

**21.** Verfahren zum Kommunizieren von Audiodaten, das aufweist:

Bereitstellen einer Darstellung einer Zusammenstellung von Informationen tragenden Klängen als eine digitale Datei von Daten;

Entfernen eines ausgewählten Segments oder mehrerer Segmente von der Datendatei, um eine spezifizierte Datendatei zu erzeugen, die die verbleibenden Daten der Datendatei aufweist, wobei die spezifizierte Datendatei mindestens einen ersten Block und einen zweiten Block besitzt;

Bereitstellen eines Codier- oder Verschlüsselungsschlüssels, der mindestens einen ersten Schlüsselbereich und einen zweiten Schlüsselbereich besitzt;

Bereitstellen eines Datenzusatzes, der mindestens eines anzeigt von: einer Stelle mindestens eines der entfernten Segmente innerhalb der Datendatei; einer Größe mindestens einer der entfernten Segmente innerhalb der Datendatei; einer Zahl von Segmenten, die entfernt ist; einen Separationsabstand zwischen zwei aufeinanderfolgenden, entfernten Segmenten innerhalb der Datendatei; und mindestens einem Bereich des Codier- oder Verschlüsselungsschlüssels;

Codieren oder Verschlüsseln des ersten Blocks und des zweiten Blocks der spezifizierten Datendatei unter Verwendung des ersten Bereichs und des zweiten Bereichs, jeweils, des Codier- oder des Verschlüsselungsschlüssels; und

Kommunizieren der codierten oder verschlüsselten, spezifizierten Datendatei in einem ersten, ausgewählten Kommunikationskanal und Kommunizieren der entfernten Segmente und des Datenzusatzes in einem zweiten ausgewählten Kommunikationskanal.

**Revendications**

**1.** Procédé de codage ou de chiffrement de données audio comprenant les étapes consistant à :

proposer un flux de signal numérique (13) représentant un assemblage de sons supportant des informations (ISA) ;

supprimer un ou plusieurs segments sélectionnés (PPC) du flux de signal numérique (13) pour produire un fichier de données spécifié (ISDF) comprenant les données restantes du flux de signal numérique (13) ; proposer une clé de codage ou de chiffrement, et coder ou chiffrer le fichier de données spécifié (ISDF) ; communiquer le fichier de données spécifié codé ou chiffré (ISDF) dans une première voie de communication sélectionnée, et communiquer les segments supprimés (PPC) dans une seconde voie de communication sélectionnée ; et proposer un supplément de données qui indique au moins un élément parmi : l'emplacement d'au moins un desdits segments supprimés (PPC) dans le flux de signal numérique (13) ; la taille d'au moins un desdits segments supprimés (PPC) ; le nombre de segments supprimés ; la distance de séparation entre deux segments supprimés consécutifs dans le flux de signal numérique (13) ; et une partie sélectionnée de ladite clé de codage ou de chiffrement.

**2.** Procédé selon la revendication 1, comprenant en outre de communiquer ledit supplément de données dans ladite seconde voie de communication sélectionnée.

**3.** Procédé selon la revendication 1, comprenant en outre de proposer ladite clé de codage ou de chiffrement avec au moins un paramètre de clé qui utilise des informations provenant d'au moins un desdits segments supprimés.

**4.** Procédé selon la revendication 1, comprenant en outre de sélectionner lesdites première et seconde voies de communication sélectionnées pour être la même voie.

**5.** Procédé selon la revendication 1, comprenant en outre de proposer ladite seconde voie de communication comme voie de communication sécurisée.

**6.** Procédé selon la revendication 1, comprenant en outre de concaténer lesdits segments supprimés et ledit supplément de données sous la forme d'un fichier de données concaténé.

**7.** Procédé selon la revendication 6, comprenant en outre de chiffrer ledit fichier de données spécifié à l'aide d'un chaînage de bloc de chiffrement d'au moins un bloc dudit fichier de données concaténé et d'au moins un bloc codé ou chiffré provenant dudit fichier de données spécifié.

**8.** Procédé selon la revendication 7, comprenant en outre de proposer ledit au moins un paramètre de codage ou de chiffrement pour ladite clé de codage ou de chiffrement, en proposant un bloc dudit fichier de données concaténé comme bloc initial pour ledit au moins un bloc codé ou chiffré desdites données.

**9.** Procédé selon la revendication 1, comprenant en outre de supprimer au moins un premier et un second segments dudit fichier de données, où le premier segment et le second segment ont la même longueur.

**10.** Procédé selon la revendication 1, comprenant en outre de supprimer au moins un premier et un second segments dudit fichier de données, où le premier segment et le second segment ont des longueurs différentes.

**11.** Procédé selon la revendication 1, comprenant en outre de combiner lesdits segments supprimés avec ledit fichier de données spécifié pour former un fichier de données combiné,
et de reproduire le fichier de données combiné sous la forme d'un assemblage de sons.

**12.** Procédé de décodage ou de déchiffrage de données audio, comprenant les étapes consistant à :

proposer un premier fichier de données codé ou chiffré ; proposer un second fichier de données et un supplément de données qui indique au moins un des éléments suivants : un emplacement assigné d'au moins un segment désigné du second fichier de données dans une version non codée et non chiffrée du premier fichier de données ; la taille d'au moins un segment désigné du second fichier de données dans le premier fichier de données non codé et non chiffré ; le nombre de segments sélectionnés désignés ; la distance de séparation d'au moins deux segments désignés consécutifs du second fichier de données dans le premier fichier de données non codé et non chiffré ; et une partie sélectionnée d'une clé de codage ou de chiffrement utilisée pour coder ou chiffrer le premier fichier de données ; et
utiliser le supplément de données pour décoder ou déchiffrer le premier fichier de données codé ou chiffré et pour positionner au moins une première séquence et une seconde séquence, tirées du second fichier de données, dans le premier fichier de données.

**13.** Procédé selon la revendication 12, comprenant en outre de proposer ledit premier fichier de données codé ou chiffré sur une première voie de communication et de proposer ladite concaténation dudit second fichier de données et dudit supplément de données sur une seconde voie de communication.

**14.** Procédé selon la revendication 13, comprenant en outre de sélectionner lesdites première et seconde voies de communication pour être la même voie.

**15.** Procédé selon la revendication 13, comprenant en outre de proposer ladite seconde voie de communication comme voie de communication sécurisée.

**16.** Procédé selon la revendication 13, comprenant en outre de déterminer au moins un paramètre de ladite clé de codage ou de chiffrement à l'aide d'informations dans ledit second fichier de données.

**17.** Procédé selon la revendication 12, comprenant en outre de proposer ledit premier fichier de données codé ou chiffré à l'aide d'un chaînage de bloc de chiffrement d'au moins un bloc de ladite concaténation dudit second fichier de données et dudit supplément de données, et d'au moins un bloc codé ou chiffré provenant dudit premier fichier de données.

**18.** Procédé selon la revendication 17, comprenant en outre de proposer au moins un paramètre de clé de codage ou de chiffrement pour ladite clé de codage ou de chiffrement en proposant au moins une séquence parmi ladite première séquence et ladite seconde séquence comme bloc initial pour ledit au moins un bloc codé ou chiffré desdites données.

**19.** Procédé selon la revendication 12, comprenant en outre de proposer ledit second fichier de données et ledit supplément de données sous la forme d'un fichier de données concaténé.

**20.** Procédé selon la revendication 12, comprenant en outre de combiner lesdits segments supprimés avec ledit fichier de données spécifié pour former un fichier de données combiné et reproduire le fichier de données combiné sous la forme d'un assemblage de sons.

**21.** Procédé de communication de données audio, comprenant les étapes consistant à :

proposer une représentation d'un assemblage de sons supportant des informations sous la forme d'un fichier numérique de données ;

supprimer un ou plusieurs segments sélectionnés du fichier de données pour produire un fichier de données spécifié comprenant les données restantes du fichier de données, le fichier de données spécifié ayant au moins un premier bloc et un second bloc ;

proposer une clé de codage ou de chiffrement ayant au moins une première partie de clé et une seconde partie de clé ;

proposer un supplément de données qui indique au moins un des éléments suivants : l'emplacement d'au moins un des segments supprimés dans le fichier de données ; la taille d'au moins un des segments supprimés dans le fichier de données ; le nombre de segments supprimés ; la distance de séparation entre deux segments supprimés consécutifs dans le fichier de données ; et au moins une partie de la clé de codage ou de chiffrement ;

coder ou chiffrer le premier bloc et le second bloc du fichier de données spécifié, à l'aide de la première partie et de la seconde partie, respectivement, de la clé de codage ou de chiffrement ; et

communiquer le fichier de données spécifié codé ou chiffré dans une première voie de communication sélectionnée et communiquer les segments supprimés et le supplément de données dans une seconde voie de communication sélectionnée.

Fig. 1

EP 1 155 402 B1

| | PPC | | PPC | | | PPC | | | | PPC | | | | | | | PPC | | |
|---|---|---|---|---|---|---|---|---|---|---|---|---|---|---|---|---|---|---|---|

| HEADER | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 |
|---|---|---|---|---|---|---|---|---|---|---|---|---|---|---|---|---|---|---|---|---|---|---|---|---|---|---|---|---|

| ISDF | ISDF | | ISDF | | | ISDF | | | ISDF | | | | |

*Fig. 2A*

ISDF

| FID | 1 | 2 | 3 | 4 | 8 | 9 | 10 | 11 | 13 | 14 | 15 | 16 | 19 | 20 | 21 | 22 | 23 | 24 |
|---|---|---|---|---|---|---|---|---|---|---|---|---|---|---|---|---|---|---|

*Fig. 2B*

SIF

| FID | FB | SB | BS | EOS | EK | 2 | 5 | 6 | 7 | 12 | 17 | 18 | 25 | 26 | 27 |
|---|---|---|---|---|---|---|---|---|---|---|---|---|---|---|---|---|

*Fig. 2C*

EP 1 155 402 B1

*Fig. 3*

PROVIDE ISA
*represented by dig. sign stream* /~ 81

REMOVE PPCs FROM ISA TO
PRODUCE ISDF(REMAINDER) AND SIF
SEQUENCES /~ 83

ASSIGN FID TO ISDF AND TO PPCs /~ 85

PROVIDE PPC AND/OR ISDF PARAMETERS
AND EK PARAMETER(s) FOR DATA SUPPLEMENT;
PROVIDE AUGMENTED PPC's, PPC+DS /~ 87

PROVIDE ENCODING/ENCRYPTION KEY EK /~ 89

ENCODE/ENCRYPT ISDF (OR ISDF+DS) TO
PROVIDE ENCODED VERSION E(ISDF) /~ 91

ENCODE/ENCRYPT PPC+DS TO PROVIDE E(PPC+DS) /~ 93

COMMUNICATE E(ISDF) ON FIRST CHANNEL AND
PPC+DS (OR E(PPC+DS)) ON SECOND CHANNEL /~ 95

PROVIDE AND DECODE (OR DECRYPT) E(ISDF)
AND PPC+DS (OR E(PPC+DS)) /~ 97

DETERMINE PPC AND/OR ISDF PARAMETERS AND EK /~ 99

DECODE (OR DECRYPT) E(ISDF); REPRODUCE ISDF /~ 101

REPOSITION PPCs WITH ISDF COMPONENTS TO
RECOVER ISA /~ 103

PROVIDE ISA FOR PLAYBACK, STORAGE,
FURTHER PROCESSING /~ 105

*Fig. 4*

CREATE FIRST AND SECOND
SEQUENCES TO HOLD ISDF AND PPCs;
ASSIGN SAME FID TO EACH SEQUENCE — 111

INITIALIZE STRIP COUNT INDEX SC=SB — 113

MOVE NEXT PPC TO IT'S ASSIGNED
PLACE IN SECOND SEQUENCE; STORE
(PART OF) PPC IN TK — 115

DECREMENT SC (SC →SC-1) — 117

119
EXAMINE
LAST UNIT OF PPC.
IS THIS UNIT
EOF
?

YES

NO

SET EOK = 1 — 121

IS
SC ≤ 0
?

NO

TERMINATE PROCEDURE — 123

YES

129 — RESET SC = FB + TK(₄)

131 — ENCODE/ENCRYPT NEXT BLOCK IN ISDF

133 — DECREMENT SC (SC →SC-1)

135
IS
THIS BLOCK
EOF
?

YES

NO

137 — TERMINATE PROCEDURE

139
IS
SC ≤ 0
?

NO

YES

$\mathcal{F}ig.$ 5

IDENTIFY DATA SUPPLEMENT DS;
READ PARAMETERS FB, SB, SISFD,
SPEC, EOK, EK — 141

INITIALIZE ASSEMBLY COUNT INDEX AC = SB — 143

MOVE NEXT BLOCK OF PPC UNITS TO IT'S
LOCATION IN ORIGINAL SEQUENCE; STORE
(PART OF) PPC IN TK — 145

DECREMENT AC (AC→AC-1) — 147

149

EXAMINE
LAST UNIT OF
PRESENT PPC BLOCK
IS THIS UNIT EOF AND
IS EOK = 1
?

YES     NO

TERMINATE PROCEDURE — 151

155 — SET EOK = 0

157 — IS AC ≤ O ?

159 — RESET AC = FB + TK(c)

161 — DECRYPT NEXT ISFD BLOCK OF ORIGINAL SEQUENCE

163 — DECREMENT AC (AC →AC-1)

165

IS
THIS BLOCK EOF
AND IS EOK = 0
?

169

IS
AC ≤ O
?     NO

YES

TERMINATE PROCEDURE — 167

*Fig. 6*